# EUROPÄISCHE PATENTSCHRIFT

(11) **EP 1 200 758 B1**
(45) Veröffentlichungstag und Bekanntmachung des Hinweises auf die Patenterteilung: **06.10.2004**
(21) Anmeldenummer: 00956320.6
(22) Anmeldetag: 27.07.2000
(51) Int. Cl.: F16J 15/40

(54) **DICHTUNG FÜR EINE WELLE, INSBESONDERE FÜR EINE GENERATOR-WELLE**
SEAL FOR A SHAFT, ESPECIALLY FOR A GENERATOR SHAFT
GARNITURE D'ETANCHEITE POUR UN ARBRE, NOTAMMENT POUR UN ARBRE DE GENERATEUR

(30) Priorität: 03.08.1999 EP 99115339
(43) Veröffentlichungstag der Anmeldung: 02.05.2002
(73) Patentinhaber: SIEMENS AKTIENGESELLSCHAFT, 80333 München (DE)
(72) Erfinder: BRUNNSTEIN, Wolfgang, D-45739 Oer-Erkenschwick (DE); REHM, Helmut, D-46119 Oberhausen (DE); RÖNNEBECK, Ralf, D-47638 Straelen-Holt (DE); LONGREE, Alexander, D-51143 Köln (DE)
(86) Internationale Anmeldenummer: PCT/EP2000/007254
(87) Internationale Veröffentlichungsnummer: WO 2001/009536

(56) Entgegenhaltungen:
- WO-A-98/36195
- DE-A- 3 723 729
- GB-A- 2 076 480
- US-A- 4 204 689
- US-A- 4 486 024

## Beschreibung

Die Erfindung betrifft eine Dichtung für eine Welle, insbesondere für die Welle eines gasgekühlten Generators, mit einem Dichtungsring, der an seiner Innenseite ein Notschmiermittel aufweist, und mit einem Auslaß, durch den Dichtöl in den Radialspalt zwischen dem Dichtungsring und der Welle einbringbar ist.

Eine derartige Wellendichtung ist aus der deutschen Patentschrift DE 37 23 729 C2 und aus der deutschen Offenlegungsschrift DE 196 39 978 C1 bekannt. Die bekannte Wellendichtung ist in Scheibenbauweise ausgeführt. Sie gewährleistet eine dichte Durchführung der rotierenden Welle durch ein mit Gas unter vorgegebenem Druck gefülltes Gehäuse, z.B. das Gehäuse eines Generators. Dazu ist der erwähnte Dichtungsring zwischen einer Führungsplatte und einem über Stehbolzen mit dieser Führungsplatte verbundenen Entlastungsflansch gehalten. In dieser Ausführung ist die Wellendichtung im eingebauten Zustand derart auf der Welle angeordnet, daß die Führungsplatte dem Gehäuse zugewandt und damit auf der "Kühlgasseite" des Dichtungsrings angeordnet ist, während sich der Entlastungsflansch auf der sogenannten "Luftseite" des Dichtungsrings befindet.

Zur Abdichtung der rotierenden Welle wird über einen Auslaß Dichtöl in den Radialspalt zwischen dem Dichtungsring und der Welle eingebracht. Das Dichtöl bildet hier einen Ölfilm, der einerseits verhindert, daß Kühlgas von der Kühlgasseite auf die Luftseite übergeht, und der andererseits auch verhindert, daß Luft von der Luftseite auf die Kühlgasseite übertritt.

Als Dichtungsring hat man bisher einen solchen verwendet, der aus Stahl oder Messing besteht und der an seiner Innenseite mit einem Notschmiermittel versehen ist. Als Notschmiermittel wurde bisher ein Weißmetall verwendet. Hierbei handelt es sich um eine Gleitlagerlegierung, die aus Sn, Sb, Cu, Zn und Ag besteht. Eine solche Gleitlagerlegierung wird unter dem Namen TEGOSTAR 738 von der Firma Goldschmitt in Essen angeboten. Dieses Weißmetall wird bei etwa 180 °C weich und verformbar. Es hat die Aufgabe, bei einem eventuellen Kontakt des Dichtungsrings mit der Welle eine Beschädigung der Welle durch seine Notschmiereigenschaften zu verhindern. Das Weißmetall wird durch Beschichtung aufgetragen. Die Beschichtung des Dichtungsrings mit dem Weißmetall ist jedoch verhältnismäßig kostenaufwendig. Außerdem zeigen sich immer wieder Probleme, die während des Betriebs auftreten, beispielsweise ein Auf- oder Abreißen des Weißmetalls.

Aus der US-A-4 486 024 ist weiter ein Dichtungsring für eine Wolle bekannt der auf seiner Innenseite ein aus einer weichen Metallegierung bestehendes Notschmiermittel aufweist.

Aufgabe der Erfindung ist es demnach, eine Dichtung der eingangs genannten Art anzugeben, die weniger aufwendig und damit kostengünstiger herstellbar ist. Darüber hinaus soll das Notschmiermittel verläßlich an der Innenseite des Dichtungsrings befestigbar sein.

Diese Aufgabe wird erfindungsgemäß dadurch gelöst, daß als Notschmiermittel ein hitzebeständiger Kunststoff oder eine weiche Messinglegierung vorgesehen ist, der bzw. die in Form von Segmenten an einem Grundkörper lösbar befestigt ist.

Anstelle von Weißmetall wird also hier ein hitzebeständiger Kunststoff oder eine Messinglegierung verwendet; und anstelle einer Beschichtung ist eine lösbare Befestigung vorgesehen. Der hier einsetzbare Kunststoff hat gegenüber dem Weißmetall den Vorzug, daß er erst bei einer höheren Temperatur als 180 °C verformbar ist. Er sollte aber ähnliche Schmiereigenschaften haben. Entsprechendes gilt für die hier einsetzbare weiche Messinglegierung. Die genannten Materialien sollten einen Härte-Bruch-Wert (HB-Wert) von kleiner/gleich 40 besitzen.

Die Segmente werden bevorzugt mittels Bolzen oder Schrauben am Grundkörper befestigt, wodurch sich eine relativ einfache Montier- und Demontierbarkeit ergibt.

Als Segmente sind bevorzugt zwei Halbschalen vorgesehen. Natürlich können auch vier Viertelschalen oder eine Anzahl anderer Teilstücke eingesetzt werden. Auch ist es möglich, die Segmente in zwei oder mehr parallelen, kreisförmigen Reihen am Grundkörper zu befestigen.

Bevorzugt wird die Konstruktion so gewählt, daß die Segmente in Axialrichtung der Welle vom Grundkörper entfernbar ist. Dies läßt sich beispielsweise dann erreichen, wenn der Grundkörper aus zwei Halbschalenkörpern besteht, die im Betrieb der Welle aneinander befestigt sind und bei der Demontage der Segmente voneinander entfernt werden können.

Als Kunststoff wird bevorzugt ein Polyetheretherketon-Werkstoff (PEEK-Werkstoff) eingesetzt.

Weitere bevorzugte Ausführungsformen der Erfindung sind in den Unteransprüchen dargestellt.

Je nach Ausführungsform lassen sich folgende Vorteile verzeichnen: Die Ersatzteilhaltung wird vereinfacht, da nur noch die besagten Segmente vorrätig gehalten werden müssen. Außerdem ist eine schnelle Wiederherrichtung des Dichtungsrings auf der Baustelle gewährleistet, weil nur die Segmente ausgetauscht werden müssen. Die früher erforderliche weitere Bearbeitung eines Dichtungsrings mit beschichtetem Notschmiermittel in einer u.U. weit entfernt gelegenen Reparaturwerkstätte mit Spezialwerkzeugen ist nicht mehr erforderlich. Darüber hinaus ergibt sich eine vereinfachte Fertigung des Dichtungsrings, da keine sehr hohe Oberflächengüte an der der Welle zugewandten Fläche notwendig ist. Der Grundkörper des Dichtungsrings kann immer wieder verwendet werden, da - wie gesagt - nur noch die Segmente ausgetauscht werden müssen.

Von Bedeutung ist auch noch folgendes: Da der Kunststoff oder die Messinglegierung thermisch höher belastet werden kann als das früher verwendete Weißmetall, kann der Radialspalt zwischen dem Dichtungsring und der Welle verringert werden. Er kann nunmehr beispielsweise weniger als 0,3 mm betragen. Mit anderen Worten: das Gesamtspiel zwischen Dichtungsring und Welle kann weniger als 0,3 mm betragen. Hierdurch wird die benötigte Menge an Dichtöl verringert. Dadurch wird auch der Austrag von Gas, bei einem gasgekühlten Generator also beispielsweise von Wasserstoff, reduziert. Somit ist auch nur eine relativ kleine Anlage zur Lieferung des Dichtöls in den Radialspalt erforderlich.

Ausführungsbeispiele der Erfindung werden im folgenden anhand von zwei Figuren näher erläutert. Dabei zeigen:
- FIG 1: den Längsaxialschnitt einer Wellendichtung für die Welle eines gasgekühlten Generators und
- FIG 2: eine Schnitt durch diese Wellendichtung in Blickrichtung II - II in verändertem Maßstab.

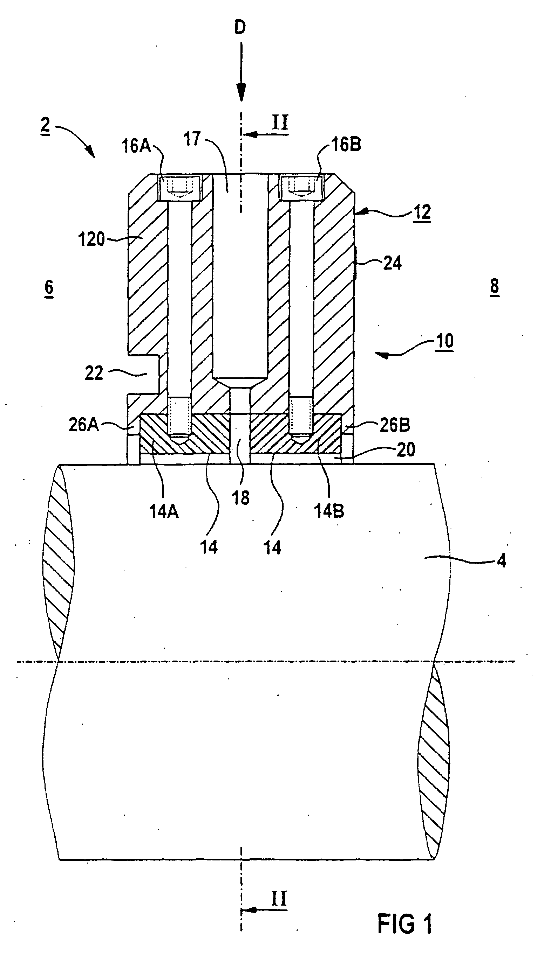

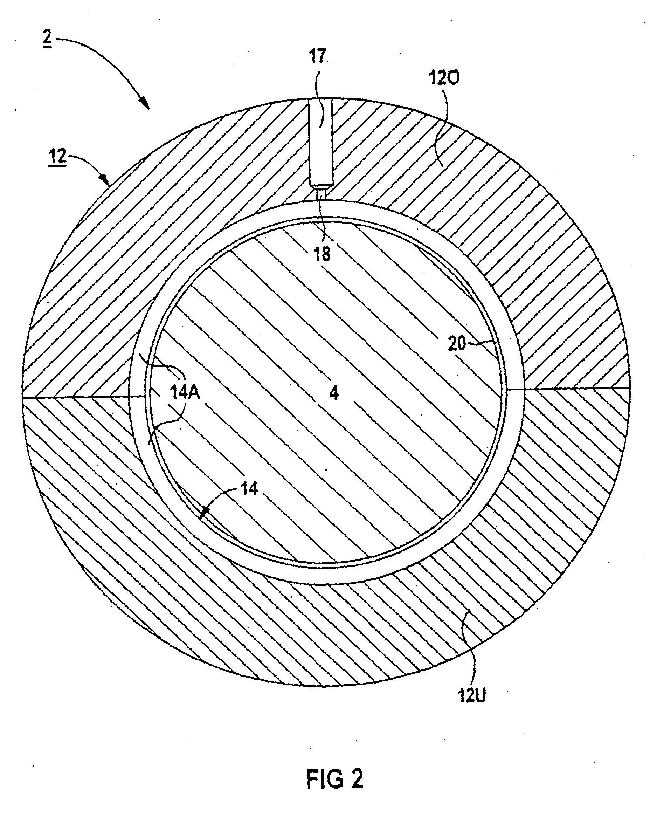

Figuren 1 und 2 zeigen eine Dichtung 2 für eine Welle 4 eines. gasgekühlten Generators, der z.B. Bestandteil einer Kraftwerksanlage ist. Die Dichtung 2 dient dazu, eine Kühlgasseite 6, insbesondere eine Wasserstoffseite, von einer Luftseite 8 zu trennen. Die Dichtung 2 stellt also sicher, daß kein Wasserstoff von der Kühlgasseite 6 auf die Luftseite 8 gelangt, und umgekehrt, daß keine Luft von der Luftseite 8 zur Kühlgasseite 6 übertritt.

Die Dichtung 2 umfaßt als wesentliches Bauelement einen Dichtungsring 10, der aus einem ringförmigen Grundkörper 12 und an dessen Innenseite, also der Welle 4 zugewandt, aus Segmentstücken oder Segmenten 14 aus Kunststoff oder aus einer weichen Messinglegierung (HB-Wert kleiner/gleich 40) besteht.

Der Grundkörper 12 besteht bevorzugt aus Stahl oder aus Messing. Er umfaßt zwei Halbringe oder Halbschalen 12 O und 12 U, die aneinander verspannt befestigt sind. Bei den Segmenten 14 kann es sich, wie dargestellt, insbesondere um zwei parallele Reihen von Segmenten 14A, 14B, speziell von Halbschalen handeln. Sie sind mittels versenkter Schrauben 16A, 16B am Grundkörper 12 lösbar befestigt. Natürlich können auch Viertelschalen oder Segmente anderer Konfiguration verwendet werden. Die Segmente 14A, 14B aus hitzebeständigem Kunststoff oder aus weicher Messinglegierung dienen als Notschmiermittel. Sie sollen eine Berührung der Welle 4, die immerhin mit 3000 U/min rotiert, durch den metallischen Grundkörper 12 und somit Beschädigungen der Welle 4 verhindern. Bei dem Kunststoff kann es sich um einen kohlefaser-verstärkten Kunststoff handeln. Als geeigneter Kunststoff hat sich ein Polyetheretherketon- oder PEEK-Werkstoff erwiesen. Ein solcher Werkstoff ist unter der Bezeichnung "TECAPEEK mod" von der Firma Ensinger GmbH & Co, DE-71154 Nutringen, erhältlich. Es hat ähnlich gute Schmiereigenschaften wie Weißmetall.

In der Mitte des Grundkörpers 12 ist eine Zuleitung oder ein Zulauf 17 für Dichtöl D vorgesehen, das zwischen den beiden Reihen von Segmenten 14A und 14B an einem Auslaß 18 auf die Welle 4 trifft. Über diesen Auslaß 18 wird das Dichtöl D in den Radialspalt 20 zwischen dem Dichtungsring 10 und der Welle 4 eingebracht. Dieser Radialspalt 20 ist relativ eng. Seine Weite kann weniger als 1 mm, sogar weniger als 0,3 mm, betragen. Das Dichtöl D bildet im Radialspalt 20 einen Ölfilm, der den oben erwähnten Gasübertritt von der einen Seite auf die andere Seite verhindert. Das Dichtöl D wird extern vom Dichtringhalter eingespeist.

Gemäß dem Stand der Technik nach der DE 176 39 978 C1 kann an der linken Seite des Dichtungsrings 10 in Figur 1 eine (nicht gezeigte) Führungsplatte und an der rechten Seite ein (nicht gezeigter) Entlastungsflansch angeordnet sein. Zur Abdichtung der (nicht gezeigten) Führungsplatte ist eine Stelle, hier speziell eine Nut 22 für eine Neben- oder Sekundärdichtung im Grundkörper 12 vorgesehen. Die Stelle, an der beim Anlegen des (nicht gezeigten) Entlastungsflansches eine weitere Nebendichtung vorgesehen ist, ist mit 24 bezeichnet.

Von großer Bedeutung ist nun, daß am Ort des Generators bereits ein beschädigtes Segment 14A, 14B gegen ein neues ausgetauscht werden kann.. Dazu sind bei Stillstand des Generators die versenkten Bolzen oder Schrauben 16A, 16B zu lösen. Dies geschieht zweckmäßigerweise, nachdem die beiden Halbringe oder Halbschalen 12 O, 12 U des Grundkörpers 12 voneinander entfernt wurden. Dann lassen sich die Segmente 14A, 14B in Axialrichtung der Welle 4 entfernen. Um den Einbau neuer Segmente 14A, 14B zu erleichtern, sind am inneren Teil des Grundkörpers 12 Einfassungen 26A, 26B vorgesehen. Diese Einfassungen 26A, 26B dienen somit zur Halterung der betreffenden Elemente 14A bzw. 14B vor deren festem Einbau.

Es soll noch einmal hervorgehoben werden: Für die einfache Demontage (im Stillstand) ist wichtig ein radial und axial geteilter Dichtringhalter.

Die dargestellte Ausführungsform ist besonders für einen Turbogenerator geeignet.

## Patentansprüche

1. Dichtung (2) für eine Welle (4), insbesondere für die Welle (4) eines gasgekühlten Generators, mit einem Dichtungsring (10), der an seiner Innenseite ein Notschmiermittel aufweist, und mit einem Auslaß (18), durch den Dichtöl (D) in den Radialspalt (20) zwischen dem Dichtungsring (10) und der Welle (4) einbringbar ist,
**dadurch gekennzeichnet, daß** als Notschmiermittel ein hitzebeständiger Kunststoff oder eine weiche Messinglegierung vorgesehen ist, der bzw. die in Form von Segmenten (14A, 14B) an einem Grundkörper (12) lösbar befestigt ist.

2. Dichtung (2) nach Anspruch 1,
**dadurch gekennzeichnet, daß** die Segmente (14A, 14B) zwei Halbschalen sind.

3. Dichtung (2) nach Anspruch 1 oder 2,
**dadurch gekennzeichnet, daß** die Segmente (14A, 14B) in zwei parallelen Reihen am Grundkörper (12) befestigt sind.

4. Dichtung (2) nach einem der Ansprüche 1 bis 3,
**dadurch gekennzeichnet, daß** die Segmente (14A, 14B) mittels Schrauben (16A, 16B) am Grundkörper (12) befestigt sind, wobei die Schrauben (16A, 16B) vorzugsweise im Grundkörper (12) versenkt sind.

5. Dichtung nach einem der Ansprüche 1 bis 4,
**dadurch gekennzeichnet, daß** der Kunststoff kohlefaser-verstärkt ist.

6. Dichtung (2) nach Anspruch 5,
**dadurch gekennzeichnet, daß** der Kunststoff ein Polyetheretherketon (PEEK)-Werkstoff ist.

7. Dichtung (2) nach einem der Ansprüche 1 bis 6,
**dadurch gekennzeichnet, daß** die Segmente (14A, 14B) durch Abheben vom Grundkörper (120, 12U) entfernbar sind.

8. Dichtung (2) nach einem der Ansprüche 1 bis 6, insbesondere nach Anspruch 7,
**dadurch gekennzeichnet, daß** der Grundkörper (12) zwei Halbschalenkörper (12A, 12B) umfaßt, die im Betrieb der Welle (4) aneinander befestigt sind.

9. Dichtung (2) nach einem der Ansprüche 1 bis 8,
**dadurch gekennzeichnet, daß** der Auslaß (18) für das Dichtöl (D) - in Längsrichtung der Welle (4) gesehen - etwa mittig im Dichtungsring (10) angeordnet ist.

10. Dichtung (2) nach einem der Ansprüche 1 bis 9,
**dadurch gekennzeichnet, daß** der Grundkörper (12) aus Stahl oder aus Messing besteht.

11. Dichtung (2) nach einem der Ansprüche 1 bis 10,
**dadurch gekennzeichnet, daß** jedes Segment (14A, 14B) mittels einer Einfassung (26A, 26B) am Grundkörper (12) gehalten ist.

## Claims

1. Seal (2) for a shaft (4), in particular for the shaft (4) of a gas-cooled generator, with a sealing ring (10) which on its inside has an emergency lubricant, and with an outlet (18) through which sealing oil (D) can be introduced into the radial gap (20) between the sealing ring (10) and the shaft (4), **characterized in that** the emergency lubricant provided is a heat-resistant plastic or a soft brass alloy which is fastened releasably in the form of segments (14A, 14B) to a basic body (12).

2. Seal (2) according to Claim 1, **characterized in that** the segments (14A, 14B) are two half shells.

3. Seal (2) according to Claim 1 or 2, **characterized in that** the segments (14A, 14B) are fastened to the basic body (12) in two parallel rows.

4. Seal (2) according to one of Claims 1 to 3, **characterized in that** the segments (14A, 14B) are fastened to the basic body (12) by means of screws (16A, 16B), the screws (16A, 16B) preferably being countersunk in the basic body (12).

5. Seal according to one of Claims 1 to 4, **characterized in that** the plastic is carbon-fibre-reinforced.

6. Seal (2) according to Claim 5, **characterized in that** the plastic is a polyether ether ketone (PEEK) material.

7. Seal (2) according to one of Claims 1 to 6, **characterized in that** the segments (14A, 14B) can be removed by being lifted off from the basic body (120, 12U).

8. Seal (2) according to one of Claims 1 to 6, in particular according to Claim 7, **characterized in that** the basic body (12) comprises two half-shell bodies (12A, 12B) which, when the shaft (4) is in operation, are fastened to one another.

9. Seal (2) according to one of Claims 1 to 8, **characterized in that**, as seen in the longitudinal direction of the shaft (4), the outlet (18) for the sealing oil (D) is arranged approximately centrally in the sealing ring (10).

10. Seal (2) according to one of Claims 1 to 9, **characterized in that** the basic body (12) consists of steel or of brass.

11. Seal (2) according to one of Claims 1 to 10, **characterized in that** each segment (14A, 14B) is held on the basic body (12) by means of a socket (26A, 26B).

## Revendications

1. Garniture d'étanchéité (2) destinée à un arbre (4), en particulier l'arbre (4) d'une génératrice refroidie au gaz, ayant une bague d'étanchéité (10) qui présente des moyens de lubrification auxiliaires sur son côté intérieur et une sortie (18) par laquelle de l'huile d'étanchéité (D) peut être introduite dans l'intervalle radial (20) situé entre la bague d'étanchéité (10) et l'arbre (4),
**caractérisée en ce qu'**il est prévu, comme lubrifiant, une matière plastique résistant à la chaleur ou un alliage de laiton tendre, qui est fixé de manière amovible sous la forme de segments (14A, 14B) sur une ossature (12).

2. Garniture d'étanchéité (2) selon la revendication 1,
**caractérisée en ce que** les segments (14A, 14B) sont deux demi-coquilles.

3. Garniture d'étanchéité (2) selon la revendication 1 ou 2,
**caractérisée en ce que** les segments (14A, 14B) sont fixés sur l'ossature (12) en deux rangs parallèles.

4. Garniture d'étanchéité (2) selon l'une quelconque des revendications 1 à 3,
**caractérisée en ce que** les segments (14A, 14B) sont fixés sur l'ossature (12) par l'intermédiaire de vis (16A, 16B), les vis (16A, 16B) étant noyées de préférence dans l'ossature (12).

5. Garniture d'étanchéité selon l'une quelconque des revendications 1 à 4,
**caractérisée en ce que** la matière plastique est renforcée de fibres de carbone.

6. Garniture d'étanchéité (2) selon la revendication 5,
**caractérisée en ce que** la matière plastique est une matière première en polyétheréthercétone (PEEK).

7. Garniture d'étanchéité (2) selon l'une quelconque des revendications 1 à 6,
**caractérisée en ce que** les segments (14A, 14B) peuvent être enlevés en les soulevant de l'ossature (120, 12U).

8. Garniture d'étanchéité (2) selon l'une quelconque des revendications 1 à 6, en particulier selon la revendication 7,
**caractérisée en ce que** l'ossature (12) comporte deux demi-coquilles d'ossature (12A, 12B), qui sont fixées l'une sur l'autre lors du fonctionnement de l'arbre (4).

9. Garniture d'étanchéité (2) selon l'une quelconque des revendications 1 à 8,
**caractérisée en ce que** la sortie (18) destinée à l'huile d'étanchéité (D) est, considéré dans le sens de la longueur de l'arbre (4), environ au milieu de la bague d'étanchéité.

10. Garniture d'étanchéité (2) selon l'une quelconque des revendications 1 à 9,
**caractérisée en ce que** l'ossature (12) est en acier ou en laiton.

11. Garniture d'étanchéité (2) selon l'une quelconque des revendications 1 à 10,
**caractérisée en ce que** chaque segment (14A, 14B) est maintenu fixé sur l'ossature (12) par l'intermédiaire d'une bordure (26A, 26B).
